(19) Europäisches Patentamt
European Patent Office
Office européen des brevets

(11) **EP 4 553 191 A1**

(12) **EUROPÄISCHE PATENTANMELDUNG**

(43) Veröffentlichungstag:
**14.05.2025 Patentblatt 2025/20**

(21) Anmeldenummer: **23208119.0**

(22) Anmeldetag: **07.11.2023**

(51) Internationale Patentklassifikation (IPC):
**C25B 1/04** (2021.01)    **B01J 23/46** (2006.01)
**C25B 11/031** (2021.01)    **C25B 11/032** (2021.01)
**C25B 11/037** (2021.01)    **C25B 11/052** (2021.01)
**C25B 11/054** (2021.01)    **C25B 11/091** (2021.01)
**C25B 11/097** (2021.01)    **H01M 4/92** (2006.01)

(52) Gemeinsame Patentklassifikation (CPC):
**C25B 1/04; C25B 11/031; C25B 11/032;
C25B 11/037; C25B 11/052; C25B 11/054;
C25B 11/091; C25B 11/097; H01M 4/92**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Heraeus Precious Metals GmbH & Co. KG**
**63450 Hanau (DE)**

(72) Erfinder:
• **Dr. Gebauer, Christian**
**63450 Hanau (DE)**
• **Maric, Robert**
**63450 Hanau (DE)**
• **Bulic, Matej**
**63450 Hanau (DE)**
• **Kemmer, Martina**
**63450 Hanau (DE)**

(74) Vertreter: **Heraeus IP**
**Heraeus Business Solutions GmbH**
**Intellectual Property**
**Heraeusstraße 12-14**
**63450 Hanau (DE)**

(54) **RUTHENIUM-IRIDIUM-MISCHOXIDKATALYSATOREN FÜR DIE WASSERELEKTROLYSE**

(57) Die vorliegende Erfindung betrifft ein pulverförmiges Katalysatormaterial, das sich insbesondere für die Sauerstoffentwicklungsreaktion bei der Wasserelektrolyse eignet. Das Katalysatormaterial umfasst ein ungeträgertes Ruthenium-Iridium-Oxid, wobei das Verhältnis der Gewichtsanteile von Iridium (Ir) zu Ruthenium (Ru) bezogen auf das Gesamtgewicht des ungeträgerten Ruthenium-Iridium-Oxids nicht größer als 4,5 ist. Das ungeträgerte Ruthenium-Iridium-Oxid weist eine Pulverleitfähigkeit von mindestens 30 S/cm auf. Die Erfindung betrifft außerdem ein Verfahren zur Herstellung eines solchen pulverförmigen Katalysatormaterials, eine Zusammensetzung, eine Katalysatorschicht, eine Elektrode und eine elektrochemische Vorrichtung enthaltend das pulverförmige Katalysatormaterial, sowie ein Verfahren zur Herstellung von Wasserstoff unter Verwendung des pulverförmigen Katalysatormaterials.

Abbildung 1

EP 4 553 191 A1

**Beschreibung**

Die vorliegende Erfindung betrifft ein pulverförmiges Katalysatormaterial, das sich insbesondere für die Sauerstoffentwicklungsreaktion bei der Wasserelektrolyse eignet. Die Erfindung betrifft außerdem ein Verfahren zur Herstellung eines solchen pulverförmigen Katalysatormaterials, eine Zusammensetzung, eine Katalysatorschicht, eine Elektrode und eine elektrochemische Vorrichtung enthaltend das pulverförmige Katalysatormaterial, sowie ein Verfahren zur Herstellung von Wasserstoff unter Verwendung des pulverförmigen Katalysatormaterials.

Wasserstoff wird als Energieträger der Zukunft angesehen, da er eine nachhaltige Energiespeicherung ermöglicht, langfristig verfügbar ist und auch mit regenerativen Energietechnologien herstellbar ist.

Derzeit ist die Dampfreformierung das gebräuchlichste Verfahren zur Herstellung von Wasserstoff. Bei der Dampfreformierung werden Methan und Wasserdampf zu Wasserstoff und CO umgesetzt. Die Wasserelektrolyse stellt eine weitere Variante der Wasserstoffherstellung dar. Über die Wasserelektrolyse kann Wasserstoff in hoher Reinheit erhalten werden.

Es gibt verschiedene Technologien auf dem Gebiet der Wasserelektrolyse, insbesondere die alkalische Wasserelektrolyse (AEL; Alkali-Elektrolyse), die saure Wasserelektrolyse unter Verwendung einer Polymerelektrolytmembran (PEM; PEM-Wasserelektrolyse), sowie die Hochtemperatur-Feststoffoxid-Elektrolyse.

Eine Wasserelektrolysezelle enthält eine Halbzelle mit einer Elektrode, an der die Sauerstoffentwicklungsreaktion (*engl. Oxygen Evolution Reaction, OER*) stattfindet, sowie eine weitere Halbzelle mit einer Elektrode, an der die Wasserstoffentwicklungsreaktion (*engl. Hydrogen Evolution Reaction, HER*) stattfindet. Die beiden Halbzellen sind durch ein Diaphragma, eine ionenleitfähige Membran oder eine Keramik voneinander getrennt. Die Elektrode, an der die Sauerstoffentwicklungsreaktion stattfindet, wird als Anode bezeichnet.

Eine Übersicht zur Technologie der Wasserelektrolyse, insbesondere der PEM-Wasserelektrolyse, findet sich beispielsweise bei M. Carmo et al., International Journal of Hydrogen Energy, 38, 2013, S. 4901-4934; und A. Buttler, H. Spliethoff, Ren. Sus. Energy Rev., 82, 2018, S. 2440-2454.

Bei einer PEM-Wasserelektrolysezelle fungiert die Polymermembran als Protonentransportmedium und isoliert die Elektroden elektrisch voneinander. Die Katalysatorzusammensetzungen für die Sauerstoffentwicklungsreaktion und die Wasserstoffentwicklungsreaktion werden beispielsweise als Anode und Kathode auf Vorder- und Rückseite der Membran aufgebracht (*engl. Catalyst Coated Membrane,* CCM), so dass eine Membran-Elektroden-Einheit erhalten wird (*engl. Membrane Electrode Assembly, MEA*).

Die an der Anode einer PEM-Wasserelektrolysezelle ablaufende Sauerstoffentwicklungsreaktion lässt sich durch folgende Reaktionsgleichung wiedergeben:

$$2H_2O \rightarrow 4H^+ + O_2 + 4e^-$$

Aufgrund ihres komplexen Reaktionsmechanismus weist die Sauerstoffentwicklungsreaktion unter Verwendung von etablierten Materialien eine langsame Reaktionskinetik auf, weshalb ein signifikantes Überpotential an der Anode überwunden werden muss, um ausreichend hohe Umsatzraten zu erzielen. Außerdem läuft die Sauerstoffentwicklungsreaktion durch die verwendete Membran unter sehr sauren (d.h. niedrigem pH-Wert) und hoch oxidativen Bedingungen ab.

Der effiziente Betrieb einer Wasserelektrolysezelle erfordert die Anwesenheit von Katalysatoren. Durch die stark korrosiven Bedingungen an der Anode (niedriger pH-Wert, signifikante Überspannung) kommen als geeignete Katalysatormaterialien insbesondere Edelmetalle wie Ruthenium und Iridium, sowie deren Oxide in Frage.

Reine Rutheniumoxide weisen eine hohe intrinsische Aktivität für die Sauerstoffentwicklungsreaktion (OER) auf, unterliegen jedoch in sauren Medien der Korrosion während der Oz-Entstehung und verlieren schnell ihre Aktivität. Neben Rutheniumoxiden sind auch Iridiumoxide ($IrO_x$) hervorragende Elektrokatalysatoren für die OER. Kristallines $IrO_2$ ist eines der widerstandsfähigsten Materialien unter Oz-Entstehungsbedingungen in stark sauren Umgebungen, jedoch weist es eine geringere Aktivität als $RuO_2$ auf. Zudem sind die Kosten für das im Material enthaltene Edelmetall höher und dessen Vorkommen ist begrenzt. In den Publikationen von M. Bernt et al., "Analysis of Voltage Losses in PEM Water Electrolyzers with Low Platinum Group Metal Loadings", J. Electrochem. Soc. 165, 2018, F305-F314, und "Current Challenges in Catalyst Development for PEM Water Electrolyzers", Chem. Ing. Tech., 2020, 92, Nr. 1-2, S. 31-39, wird dargelegt, dass ein derzeit üblicher Beladungsgrad an Iridium auf der Anodenseite der katalysatorbeschichteten Membran etwa 2 mg Iridium pro cm$^2$ beschichteter Membranfläche beträgt, dieser Beladungsgrad aber noch deutlich reduziert werden muss, um einen großskaligen Einsatz der PEM-Elektrolyse auf Basis der verfügbaren Iridiummenge zu ermöglichen.

Mischoxide wie $Ir_xRu_{1-x}O_2$ scheinen einen guten Kompromiss in Bezug auf Aktivität und Stabilität für die OER in sauren Elektrolyten zu bieten. Bestrebungen, um aus der Kombination der Materialien einen stabilen und leistungsfähigen Katalysator zu erzeugen sind bekannt aber nicht in Gänze erfolgreich, da aufgrund der Materialbeschaffenheiten (hohe Dichte vs. Morphologie) trotzdem eine ausreichende Verringerung der Iridium- bzw. Edelmetallmenge in der Elektrode noch nicht erreicht werden konnte.

Der Stand der Technik geht größtenteils davon aus, dass entsprechende Katalysatormaterialien in ungeträgerter Form die beschriebenen Anforderungen nicht erfüllen können, wie beispielsweise in der EP 1701790 A1 beschrieben. Zur Erhöhung der Leitfähigkeit der Katalysatormaterialien und um Edelmetall einzusparen werden diese daher typischerweise auf einem geeigneten Trägermaterial aufgebacht verwendet. Die CN 116479466 A beschreibt jedoch bereits einen Ansatz, in dem ein ungeträgertes Ruthenium-Iridium-Mischoxid vorgeschlagen wird. Bekannte Katalysatormaterialien weisen jedoch insbesondere bei Anwendung in einer Elektrode noch keine vollständig geeigneten Eigenschaften auf, vor allem im Hinblick auf den erhöhten Schichtwiderstand, den eine Katalysatorschicht mit solchen Materialien aufweist.

Sowohl zur Herstellung von reinen Iridiumoxiden als auch von Ruthenium-Iridium-Oxiden wird häufig die Herstellungsmethode nach Adams eingesetzt. Bei dem von Adams und Shriner bereits 1923 grundlegend beschriebenen Verfahren werden ein oder mehrere Metallchlorid-Vorläufer mit $NaNO_3$ umgesetzt und anschließend an der Luft bei erhöhter Temperatur geschmolzen. Die Eigenschaften des hergestellten Metalloxids sind abhängig von den Reaktionsparametern, insbesondere der Temperatur und Dauer der Hitzebehandlung, sowie den eingesetzten Vorläuferverbindungen.

Es war eine Aufgabe der Erfindung, mindestens einen Nachteil des Stands der Technik zu überwinden. Eine Aufgabe der vorliegenden Erfindung war die Bereitstellung eines Katalysatormaterials für die Sauerstoffentwicklungsreaktion in der sauren Wasserelektrolyse (PEM-Wasserelektrolyse), welches eine verbesserte Aktivität bei gleichzeitiger Langzeitstabilität aufweist. Zudem sollte der Anteil an Iridium im Katalysatormaterial möglichst gering sein, was zudem die Bereitstellung eines kostengünstigen Katalysatormaterials ermöglichen sollte.

Eine weitere Aufgabe bestand darin, dass sich aus dem bereitzustellenden Katalysatormaterial eine Katalysatorschicht, insbesondere eine Anode in einer Membranelektrodeneinheit, herstellen lässt, die eine möglichst geringe flächenbezogene Iridium-Beladung (d.h. möglichst geringe Menge an Iridium pro $cm^2$ Membran) bei weiterhin hoher Aktivität hinsichtlich der Sauerstoffentwicklungsreaktion aufweist. Eine weitere Aufgabe bestand darin, dass eine entsprechende Elektrode einen niedrigen Flächenwiderstand aufweisen sollte.

Gemäß der vorliegenden Erfindung wird zumindest eine der Aufgaben gelöst durch ein pulverförmiges Katalysatormaterial, umfassend ein ungeträgertes Ruthenium-Iridium-Oxid, wobei das Verhältnis der Gewichtsanteile von Iridium (Ir) zu Ruthenium (Ru) bezogen auf das Gesamtgewicht des Ruthenium-Iridium-Oxids nicht größer als 4,5 ist, dadurch charakterisiert, dass das ungeträgerte Ruthenium-Iridium-Oxid eine Pulverleitfähigkeit von mindestens 30 S/cm aufweist.

Das erfindungsgemäße Katalysatormaterial zeigt eine hohe katalytische Aktivität für die Sauerstoffentwicklungsreaktion und ist unter deren Bedingungen stabil. Die Reaktion erfolgt unter stark korrosiven Bedingungen, typischerweise bei einem pH-Wert kleiner 3 und einem Potential von mehr als 1,5 $V_{cell}$. Da die Gesamtmenge an Iridium zudem niedrig gehalten wird, ergibt sich ein kostengünstiges Katalysatormaterial. Das Katalysatormaterial ermöglicht eine Verringerung der Iridiumbeladung in der Elektrode auf einen Bereich von unter 0,3 mg(Ir)/$cm^2$.

Im Rahmen der vorliegenden Erfindung wurde überraschend erkannt, dass sich ein Kompromiss zwischen möglichst niedrigem Iridiumgehalt und einer hohen Aktivität hinsichtlich der Sauerstoffentwicklungsreaktion realisieren lässt, wenn der Gewichtsanteil des Iridiums auf die Mindestpulverleitfähigkeit abgestimmt ist, so dass die oben genannte Bedingungen erfüllt sind. Ein solches Katalysatormaterial hat sich zudem als besonders geeignet zur Herstellung von Elektrodenschichten mit einem vorteilhaft geringem Schichtwiderstand gezeigt.

Das erfindungsgemäße Katalysatormaterial ist besonders geeignet als Katalysator für die Sauerstoffentwicklungsreaktion bei der Wasserelektrolyse. Ebenso zeigt es Aktivität bei der $CO_2$-Elektrolyse, der elektrochemischen Peroxidherstellung, sowie als Additiv in Anoden von Brennstoffzellen.

Typischerweise werden solche Katalysatormaterialien auf einem Trägermaterial aufgebracht eingesetzt, einerseits um die Verteilung des nanopartikulären Materials zu Verbessern und andererseits um die Leitfähigkeit in einen praktikablen Bereich zu erhöhen. Insbesondere für elektrochemische Anwendungen eingesetzte leitfähige Träger unterliegen jedoch in der Regel unter oxidativen Bedingungen Korrosionsphänomenen und verlieren dadurch ihre Leitfähigkeit zumindest teilweise und/oder degradieren. Überraschend hat sich gezeigt, dass ein Katalysatormaterial mit einer Mindestpulverleitfähigkeit von 30 S/cm sich bei gleichzeitiger geringer Iridium-Menge auch ungeträgert einsetzen lässt.

Die vorliegende Erfindung betrifft ein Katalysatormaterial. Unter einem "Katalysator" wird ein für eine entsprechende Anwendung katalytisch aktives Material verstanden.

Das pulverförmige Katalysatormaterial umfasst ein Ruthenium-Iridium-Oxid, bevorzugt besteht das pulverförmige Katalysatormaterial bis auf unvermeidliche Verunreinigungen aus dem Ruthenium-Iridium-Oxid. Unter einem solchen Oxid wird im Rahmen der vorliegenden Anmeldung ein Material verstanden, dass aus Ruthenium, Iridium und Sauerstoff besteht. Es handelt sich dabei um ein homogenes Mischoxid (*solid solution*), mit anderen Worten handelt es sich nicht um ein Mehrkomponentensystem oder Kompositmaterial. Das Vorliegen eines Mischoxids lässt sich beispielsweise durch Röntgenbeugungsexperimente nachweisen. Insbesondere treten in den XRD-Mustern keine Signale für die einzelnen Oxide (Rutheniumoxide und Iridiumoxide) auf. Es werden ausschließlich Signale des Mischoxids erhalten, was nicht nur am Signalmuster, sondern auch an den zu den reinen Oxiden unterschiedlichen Beugungswinkeln zu erkennen ist.

Bevorzugt entspricht die Zusammensetzung des Ruthenium-Iridium-Oxids der Formel $Ir_xRu_{1-x}O_y$, wobei x kleiner 1 und größer 0 ist und y im Bereich von 1,5 bis 2 liegt. Es kann bevorzugt sein, dass y kleiner 2 ist. In solchen Fällen kann Sauerstoff unterstöchiometrisch vorliegen, insbesondere solche Ruthenium-Iridium-Oxide haben sich als vorteilhaft bezüglich ihrer Aktivität und gleichzeitigen Stabilität herausgestellt.

Das Katalysatormaterial kann gegebenenfalls andere Metalle neben Iridium und Ruthenium umfassen, beispielsweise in einer Menge von bis zu und einschließlich 5 Gew.-%, bezogen auf das Gesamtgewicht des Katalysatormaterials, zweckmäßigerweise bis zu und einschließlich 1 Gew.-%. Anders ausgedrückt, die Metalle im Katalysatormaterial bestehen bevorzugt bis auf unvermeidliche Verunreinigungen aus Iridium und Ruthenium. Die Gewichtsanteile von Iridium, Ruthenium und Sauerstoff addieren sich vorzugsweise zu 100 Gew.-%, mit anderen Worten besteht das Katalysatormaterial bis auf unvermeidliche Verunreinigungen bevorzugt aus Iridium, Ruthenium und Sauerstoff.

Bevorzugt beträgt der Anteil von Iridium im Ruthenium-Iridium-Oxid nicht mehr als 70 Gew.-%, bezogen auf das Gesamtgewicht des Ruthenium-Iridium-Oxids, insbesondere nicht mehr als 65 Gew.-%, besonders bevorzugt nicht mehr als 55 Gew.-%. Beispielsweise enthält das Ruthenium-Iridium-Oxid Iridium in einer Menge von 10 bis 70 Gew.-%, bevorzugter 15 bis 65 Gew.-%.

Bevorzugt beträgt der Anteil von Ruthenium im Ruthenium-Iridium-Oxid mehr als 15 Gew.-%, bezogen auf das Gesamtgewicht des Ruthenium-Iridium-Oxids, insbesondere mehr als 25 Gew.-%, besonders bevorzugt mehr als 35 Gew.-%. Beispielsweise enthält das Ruthenium-Iridium-Oxid Ruthenium in einer Menge von 15 bis 70 Gew.-%, bevorzugter 25 bis 65 Gew.-%.

Das Verhältnis der Gewichtsanteile von Iridium (Ir) zu Ruthenium (Ru) bezogen auf das Gesamtgewicht des Ruthenium-Iridium-Oxids ist nicht größer als 4,5. Es hat sich herausgestellt, dass ein Katalysatormaterial mit einer solchen Zusammensetzung eine verbesserte Aktivität aufweist. Die Gewichtsanteile von Ir und Ru können über optische Emissionsspektrometrie mit induktiv gekoppeltem Plasma (ICP-OES) wie hierin beschrieben bestimmt werden. Bevorzugterweise ist das Verhältnis der Gewichtsanteile von Ir zu Ru bezogen auf das Gesamtgewicht des Ruthenium-Iridium-Oxids nicht größer als 4,0, insbesondere nicht größer als 3,5.

Das erfindungsgemäße Katalysatormaterial ist pulverförmig, mit anderen Worten umfasst das Katalysatormaterial Partikel, insbesondere besteht das Material aus Partikeln. Wie dem Fachmann bekannt, wird unter einem pulverförmigen Material ein Material verstanden, das aus miteinander nicht verbundenen Partikeln besteht. Die Partikel können jedoch in loser oder fester agglomerierter Form vorliegen. Mit anderen Worten handelt es sich nicht um ein monolithisches Material oder eine Material-Schicht, sondern um ein Konglomerat einzelner Teilchen. Diese einzelnen Teilchen wiederum können optional jedoch auch aus mehreren Partikeln bestehen, beispielsweise aus zusammengesinterten Nanopartikeln.

Die Partikel des pulverförmigen Katalysatormaterials können verschiedenste Partikelformen aufweisen. Beispielsweise können die Partikel unregelmäßig geformt sein oder sie können eine definierte Form haben; sie können beispielsweise kugelförmig, oval, plättchenförmig oder stäbchenförmig sein. Die Partikel können porös sein und/oder Hohlräume aufweisen oder nichts von beidem. Sie können eine glatte oder raue oder strukturierte äußere Oberfläche besitzen. Die Partikel können auch in aggregierter Form vorliegen.

Der mittlere Partikeldurchmesser $d_{50}$ des Katalysatormaterials ist bevorzugt kleiner als 8 µm, insbesondere kleiner als 6 µm, besonders bevorzugt kleiner als 5 µm. Die Partikelgrößenverteilung kann durch Laserbeugungsverfahren gemäß der ISO-Norm 13320:2020 ermittelt werden. Aus der Volumenverteilungskurve lassen sich die Werte $d_{50}$ und $d_{90}$ errechnen. Hierbei bedeutet zum Beispiel "$d_{50}$", dass 50 Vol.-% der Partikel einen Durchmesser unterhalb dieses Wertes aufweisen. Bevorzugt liegt der mittlere Partikeldurchmesser $d_{50}$ des Katalysatormaterials im Bereich von 0,5 bis 8 µm, bevorzugt im Bereich von 0,8 bis 6 µm, besonders bevorzugt im Bereich von 1,0 bis 5 µm.

Der $d_{90}$-Wert des Katalysatormaterials ist bevorzugt kleiner als 10 µm, insbesondere kleiner als 8 µm, besonders bevorzugt kleiner als 6 µm. Hierbei bedeutet "$d_{90}$", dass 90 Vol.-% der Partikel einen Durchmesser unterhalb dieses Wertes aufweisen. Bevorzugt liegt der $d_{90}$-Wert des Katalysatormaterials im Bereich von 1,0 bis 10,0 µm, bevorzugt im Bereich von 1,5 bis 8,0 µm, besonders bevorzugt im Bereich von 2,0 bis 6,0 µm.

Insbesondere geeignet sind pulverförmige Katalysatormaterialien, die Partikel aufweisen bei denen das Verhältnis von $d_{90}$ zu $d_{50}$ kleiner als 2,5 ist, insbesondere kleiner 2,0, besonders bevorzugt kleiner als 1,5.

Das Ruthenium-Iridium-Oxid ist ungeträgert. Mit anderen Worten liegt das Ruthenium-Iridium-Oxid nicht auf und/oder an einem Trägermaterial vor. Ein "ungeträgertes" Material ist insbesondere in Abgrenzung zu einem "geträgerten" zu verstehen: Unter einem "geträgerten" Katalysatormaterial versteht der Fachmann ein Material, bei dem eine katalytisch aktive Spezies auf, an oder in einem entsprechenden Trägermaterial vorliegen und durch physikalische oder chemische Bindungen an das Trägermaterial gebunden oder fixiert sind. So kann die katalytisch aktive Spezies beispielsweise durch ionische oder kovalente Bindungen oder durch unspezifische Wechselwirkungen wie Van-der-Waals-Kräfte an das Trägermaterial gebunden oder fixiert sein.

Es hat sich überraschend gezeigt, dass ein Katalysatormaterial mit den beanspruchten Eigenschaften auch ohne Trägermaterial für eine Anwendung mit niedrigem Iridiumanteil in der Elektrode bei der Sauerstoffentwicklungsreaktion geeignet ist. Mit dem erfindungsgemäßen Katalysatormaterial sind Anteile von Iridium in der Elektrode von weniger als 60 Gew.-% Iridium realisierbar, bezogen auf das Gesamtgewicht von eingesetztem Katalysatormaterial und Ionomer in der entsprechenden Elektroden-Schicht.

Das üblicherweise verwendete Trägermaterial bewirkt einerseits eine erhöhte Leitfähigkeit des Katalysatormaterials, zum anderen wird dadurch erst der Einsatz einer reduzierten Iridium-Menge, insbesondere für reine Iridium-Oxide, in der Elektroden-Anwendung möglich. Überraschenderweise wurde im Rahmen der vorliegenden Erfindung gefunden, dass die Iridium-Beladung der Elektrode auch mit einem erfindungsgemäßen Katalysatormaterial reduziert werden kann, ohne dass ein Trägermaterial notwendig ist.

Das ungeträgerte Ruthenium-Iridium-Oxid weist eine Pulverleitfähigkeit von mindestens 30 S/cm auf. Die Pulverleitfähigkeit des Katalysatormaterials kann gemäß der hierin beschriebenen Methode zur Pulverleitfähigkeitsmessung bestimmt werden.

Es hat sich gezeigt, dass eine Mindestpulverleitfähigkeit in diesem Bereich ein Katalysatormaterial mit einer besonders hohen katalytischen Aktivität gewährleistet. Katalysatormaterialien mit geringerer elektrischer Pulverleitfähigkeit führen während der Wasserelektrolyse zu hohen Widerständen in der Katalysatorschicht einer Elektrode und damit zu einer erheblichen Verringerung der Effizienz der PEM-Elektrolyse. In der Anode einer Wasserelektrolysezelle kann die auf der Membran vorliegende katalysatorhaltigen Beschichtung beispielsweise an eine poröse Transportschicht (*engl. porous transport layer,* PTL) angrenzen. Poröse Transportschichten sind beispielsweise aus Titan gefertigt, wobei sich eine dünne Oxidschicht auf dem Metall ausbilden kann. Wenn das Katalysatormaterial bzw. die Katalysatorschicht eine niedrige elektrische Leitfähigkeit aufweist, für Letztere bestimmt über den Schichtwiderstand, kann dies an der Grenzfläche zwischen der katalysatorhaltigen Beschichtung und der porösen Transportschicht zu einer unerwünschten Erhöhung des Kontaktwiderstands führen und so die Effizienz der Wasserelektrolysezelle nachteilig beeinflussen.

Bevorzugterweise weist das ungeträgerte Ruthenium-Iridium-Oxid eine Pulverleitfähigkeit von mindestens 40 S/cm auf, insbesondere von mindestens 50 S/cm. Geeignete Bereiche für die Pulverleitfähigkeit sind beispielsweise 30 bis 190 S/cm, insbesondere 40 bis 120 S/cm, besonders bevorzugt 50 bis 110 S/cm.

Bevorzugt weist das ungeträgerte Ruthenium-Iridium-Oxid im XRD-Spektrum (Cu K$\alpha$) mindestens ein Maximum im Bereich von 66° bis 67° (2θ) auf. XRD-Spektren können gemäß der später beschriebenen Methode erhalten werden. Insbesondere bevorzugt sind Katalysatormaterialien, die keine Signale im XRD-Spektrum aufweisen, die von einer metallischen Ir-Phase (Referenz: 00-046-1044), einer reinen $IrO_2$-Phase (Referenz: 00-043-1027), einer metallischen Ru-Phase (Referenz: 00-006-0663), oder einer reinen $RuO_2$-Phase (Referenz: 00-043-1019) abgeleitet sind. Die Phasenidentifizierung erfolgt durch Vergleich des Röntgenbeugungsmusters mit den entsprechenden Referenzen der ICCD-Datenbank (*International Centre for Diffraction Data*). Insbesondere bevorzugt weist das ungeträgerte Ruthenium-Iridium-Oxid eine Rutil-Struktur auf.

Bevorzugterweise weist das ungeträgerte Ruthenium-Iridium-Oxid Kristallite im Bereich von 1 bis 10 nm auf, bestimmt über den XRD-Reflex bei 28°(2Θ) wie später beschrieben, insbesondere im Bereich von 2 bis 7 nm, besonders bevorzugt im Bereich von 2,5 bis 5,1 nm.

Zweckmäßigerweise liegt die elektrochemische Aktivität des pulverförmigen Katalysatormaterials, ermittelt als Stromdichte in A/g(Ir) bei 1,5 V gegen RHE (*engl. reversible hydrogen electrode*) wie später beschrieben, in einem Bereich von 200 bis 5000 A/g(Ir), vorzugsweise in einem Bereich von 250 bis 3500 A/g(Ir).

Bevorzugt weist das ungeträgerte Ruthenium-Iridium-Oxid eine BET-Oberfläche von mindestens 80 m$^2$/g auf, insbesondere mindestens 100 m$^2$/g, besonders bevorzugt mindestens 120 m$^2$/g. Eine große BET-Oberfläche bewirkt, dass mehr aktive Stellen des Katalysatormaterials zugänglich sind und somit die Aktivität und insbesondere die Massenaktivität steigt.

In bevorzugten Ausführungsformen liegt die BET-Oberfläche im Bereich von 80 bis 350 m$^2$/g, insbesondere im Bereich von 100 bis 300 m$^2$/g, besonders bevorzugt im Bereich von 120 bis 250 m$^2$/g.

Zur Vergrößerung der BET-Oberfläche von Katalysatormaterialien können Templatverfahren verwendet werden. Alternativ werden Porenbildner als Additive in der Synthese eingesetzt, wie beispielsweise in der CN 114164458 A beschrieben. Solche Additive müssen jedoch nach der Synthese in einem zusätzlichen Verfahrensschritt wieder entfernt werden. Im Rahmen der vorliegenden Erfindung wurde erkannt, dass geeignete ungeträgerte Ruthenium-Iridium-Oxide bevorzugt ohne Verwendung eines solchen Porenformers hergestellt werden können. Beispiele für porenbildende Additive sind dem Fachmann bekannt, zu nennen sind unter Anderem Aminosäuren, Carbonate und Carboxylate.

Die Herstellung des pulverförmigen Katalysatormaterials kann beispielsweise durch die Abwandlung eines Verfahrens erfolgen, das dem Fachmann als "Adam Fusion" bekannt ist. Bei der Adams Fusion wird typischerweise eine wässrige Metallvorläuferverbindung mit einem Alkalimetallnitrat umgesetzt, wodurch ein Metall-haltiges Nitrat-Zwischenprodukt gebildet wird. Anschließend wird dieses Zwischenprodukt kalziniert, um das entsprechende Metalloxid zu erhalten.

Die Herstellung des pulverförmigen Katalysatormaterials kann beispielsweise erfolgen durch ein Verfahren, umfassend die aufeinanderfolgenden Schritte

(i) Bereitstellung einer Zusammensetzung, enthaltend ein Lösungsmittel, eine Iridium-Vorläuferkomponente und eine Ruthenium-Vorläuferkomponente,

(ii) Kontaktieren der Zusammensetzung mit einem Sauerstoffdonor-haltigen Salz,

(iii) thermische Behandlung unter oxidierenden Bedingungen.

Die vorliegende Erfindung betrifft auch ein entsprechendes Verfahren zur Herstellung eines hierin beschriebenen pulverförmigen Katalysatormaterials.

Bei einer solchen Herstellungsmethode umfasst das hergestellte Ruthenium-Iridium-Oxid nur oxidiertes Iridium und Ruthenium, mit anderen Worten umfasst das hergestellte pulverförmige Katalysatormaterial kein metallisches Iridium und/oder Ruthenium. Ein solches Material ist gegen das Auflösen in den umgebenden Elektrolyten unter den hochkorrosiven Bedingungen der OER resistent.

Bei den Schritten (i) bis (iii) handelt es sich um aufeinanderfolgende Schritte, es kann sich dabei um direkt aufeinanderfolgende Schritte ohne Zwischenschritte handeln, das Verfahren kann aber auch weitere Zwischenschritte umfassen.

Während der Herstellung des Katalysatormaterials werden bevorzugterweise keine Bedingungen angewandt, die die Iridium-Vorläuferkomponente und/oder die Ruthenium-Vorläuferkomponente zu metallischem Iridium oder Ruthenium reduzieren können.

Die in Schritt (i) bereitgestellte Zusammensetzung umfasst ein Lösungsmittel. Ein "Lösungsmittel" bedeutet hierin, dass das Lösungsmittel mindestens eine flüssige Substanz umfasst, in welcher die Iridium-Vorläuferkomponente und die Ruthenium- Vorläuferkomponente löslich sind. Für den Fachmann folgt, dass die in Schritt (i) bereitgestellte Zusammensetzung die Iridium-Vorläuferkomponente und die Ruthenium-Vorläuferkomponente in gelöster Form umfasst, es sich also nicht um ein disperses System handelt. Mit anderen Worten, die Zusammensetzung umfasst typischerweise keine ungelösten Stoffe, d.h. auch keine Ausfällungen oder Niederschläge. Das mindestens Lösungsmittel kann mehrere chemische Substanzen enthalten, d.h. das Lösungsmittel kann auch ein Lösungsmittelgemisch sein.

Das Lösungsmittel kann ausgewählt sein aus der Gruppe bestehend aus Wasser und organischen Lösungsmitteln. Das organische Lösungsmittel kann aus einer Vielzahl üblicher organischer Lösungsmittel ausgewählt sein. Zweckmäßigerweise ist das organische Lösungsmittel unter den Verarbeitungsbedingungen der Zusammensetzung im Wesentlichen flüchtig. Organische Lösungsmittel können beispielsweise Alkohole, wie Methanol oder Ethanol, sein. Bevorzugt besteht das Lösungsmittel zu mindestens 80 Vol-% aus Wasser, bevorzugter zu mindestens 90 Vol.-%, insbesondere zu mindestens 95 Vol.-%. Es kann vorteilhaft sein, dass das Lösungsmittel vollständig aus Wasser besteht.

Vorteilhafterweise umfasst die Zusammensetzung das Lösungsmittel zu mindestens 30 Gew.-%, besonders bevorzugt zu mindestens 40 Gew.-%, ganz besonders bevorzugt zu mindestens 50 Gew.-%, jeweils bezogen auf das Gesamtgewicht von Lösungsmittel, Iridium-Vorläuferkomponente und Ruthenium-Vorläuferkomponente. In einer bevorzugten Ausführungsform umfasst die Zusammensetzung das Lösungsmittel zu 20 bis 99,5 Gew.-%, bevorzugt zu 30 bis 95 Gew.-%.

Die Zusammensetzung enthält außerdem eine Iridium-Vorläuferkomponente und eine Ruthenium-Vorläuferkomponente. Bei der Iridium-Vorläuferkomponente und der Ruthenium-Vorläuferkomponente handelt es sich um eine oder mehrere Iridium-Verbindungen und eine oder mehrere Ruthenium-Verbindungen. Geeignete Vorläuferkomponenten sind beispielsweise Salze und Säuren von Iridium und Ruthenium. Typischerweise ist die Oxidationsstufe von Iridium und/oder Ruthenium in der edelmetallhaltigen Vorläuferverbindung +III oder +IV. Geeignete Iridium- oder Ruthenium-Salze sind die entsprechenden Halogenidsalze, Chlorkomplexe, Nitratsalze oder Acetatsalze.

Geeignete Iridium(III)- oder Iridium(IV)-Verbindungen sind dem Fachmann bekannt. Beispielsweise ist die Iridium(III)- oder Iridium(IV)-Verbindung ein Salz (z.B. ein Iridiumhalogenid wie $IrCl_3$ oder $IrCl_4$; ein Salz, dessen Anion ein Chloro-Komplex $IrCl_6^{2-}$ ist; ein Iridiumnitrat oder ein Iridiumacetat) oder eine Iridium-haltige Säure wie z.B. $H_2IrCl_6$. In einer bevorzugten Ausführungsform enthält die Zusammensetzung ein Iridium(IV)-halogenid, insbesondere Ir(IV)-chlorid.

Die Menge des Iridiums in der Zusammensetzung kann in weiten Bereichen variieren und wird bestimmt durch die beabsichtige Zusammensetzung des Katalysatormaterials. Die "Menge des Iridiums" bezieht sich auf den Iridiumanteil in der Zusammensetzung, mit anderen Worten wird damit nicht die Menge der gesamten Iridium-Vorläuferkomponente bezeichnet. Besonders gute Ergebnisse werden erhalten, wenn die Zusammensetzung Iridium in einer Menge von mindestens 0,5 Gew.-% enthält, insbesondere mindestens 1 Gew.-%, vorzugsweise mindestens 5 Gew.-%, bevorzugt mindestens 10 Gew.-%. Bevorzugt umfasst die Zusammensetzung 0,5 bis 60 Gew.-% Iridium, bezogen auf das Gesamtgewicht der Zusammensetzung umfassend das Lösungsmittel, die Iridium-Vorläuferkomponente und die Ruthenium-Vorläuferkomponente. In einer Ausführungsform umfasst die Zusammensetzung 1 bis 50 Gew.-% Iridium, bevorzugt 5 bis 40 Gew.-%.

Auch geeignete Ruthenium(III)- oder Ruthenium(IV)-Verbindungen sind dem Fachmann bekannt. Beispielsweise ist die Ruthenium(III)- oder Ruthenium(IV)-Verbindung ein Salz (z.B. ein Rutheniumhalogenid wie $RuCl_3$ oder $RuCl_4$; ein Salz, dessen Anion ein Chloro-Komplex $RuCl_6^{2-}$ ist; ein Rutheniumnitrat, ein Rutheniumnitrosylnitrat oder ein Rutheniumacetat) oder eine Ruthenium-haltige Säure wie z.B. $H_2RuCl_6$. In einer bevorzugten Ausführungsform enthält die Zusammensetzung ein Ruthenium(IV)-halogenid, insbesondere Ru(IV)-chlorid.

Die Menge des Rutheniums in der Zusammensetzung kann in weiten Bereichen variieren und wird bestimmt durch die beabsichtige Zusammensetzung des Katalysatormaterials. Die "Menge des Rutheniums" bezieht sich auf den Rutheniumanteil in der Zusammensetzung, mit anderen Worten wird damit nicht die Menge der gesamten Ruthenium-Vorläuferkomponente bezeichnet. Besonders gute Ergebnisse werden erhalten, wenn die Zusammensetzung Ruthenium in einer Menge von mindestens 0,5 Gew.-% enthält, insbesondere mindestens 1 Gew.-%, vorzugsweise mindestens 5 Gew.-%, bevorzugt mindestens 10 Gew.-%. Bevorzugt umfasst die Zusammensetzung 0,5 bis 60 Gew.-% Ruthenium, bezogen auf das Gesamtgewicht der Zusammensetzung umfassend das Lösungsmittel, die Iridium-Vorläuferkomponente und die Ruthenium-Vorläuferkomponente. In einer Ausführungsform umfasst die Zusammensetzung 1 bis 50 Gew.-% Ruthenium, bevorzugt 5 bis 40 Gew.-%.

Der Iridium-plus-Ruthenium-Anteil in der Zusammensetzung liegt beispielsweise in einem Bereich von 1 bis 85 Gew.-%, insbesondere in einem Bereich von 5 bis 75 Gew.-%.

Bevorzugt weist die Zusammensetzung einen pH-Wert $\leq 7$, noch bevorzugter $\leq 5$ auf. Beispielsweise weist die Zusammensetzung einen pH-Wert von 1 - 7, bevorzugter 2 - 6 oder 3 - 5 auf.

Bevorzugt liegen die Iridium-Vorläuferkomponente und die Ruthenium-Vorläuferkomponente in einem molaren Verhältnis von 2:1 bis 1:10 vor, bezogen auf den Anteil von Iridium und Ruthenium in der jeweiligen Vorläuferkomponente, insbesondere in einem molaren Verhältnis von 1:1 bis 1:9.

In Schritt (i) wird eine Zusammensetzung bereitgestellt, die eine Iridium-Vorläuferkomponente und eine Ruthenium- Vorläuferkomponente enthält. Die Vorläuferkomponenten können hierbei in einem Schritt bereitgestellt werden, also gleichzeitig im Lösungsmittel gelöst werden, sie können aber auch in aufeinanderfolgenden Schritten bereitgestellt werden. Die Bereitstellung der Zusammensetzung kann auch derart erfolgen, dass eine der Vorläuferkomponenten gelöst vorliegt und die mindestens eine weitere Vorläuferkomponenten in gelöster oder ungelöster Form zugegeben wird. Für den Fall, dass die Vorläuferkomponenten in separaten Zusammensetzungen bereitgestellt werden, können diese das gleiche oder unterschiedliche Lösungsmittel oder Lösungsmittelgemische umfassen.

Vorteilhafterweise erfolgt während der Bereitstellung eine Durchmischung der Zusammensetzung, beispielsweise durch Rühren.

Bevorzugterweise enthält die Zusammensetzung keine porenbildenden Additive. Beispiele für porenbildende Komponenten sind dem Fachmann bekannt, zu nennen sind insbesondere polymere Komponenten wie Tenside oder Polyalkohole sowie Carbonat-haltige Salze. Vorteilhafterweise wird das gesamte Verfahren durchgeführt, ohne dass ein porenbildendes Additiv eingesetzt wird.

In Schritt (ii) wird die Zusammensetzung mit einem Sauerstoffdonor-haltigen Salz kontaktiert. Unter Sauerstoffdonor-haltigen Salzen werden Salze verstanden, die in der Lage sind, in chemischen Reaktionen Sauerstoff abzugeben. Solche Salze können als Quelle von aktivem Sauerstoff fungieren, der als Oxidationsmittel dient.

Bei dem Sauerstoffdonor-haltigen Salz handelt es sich bevorzugt um ein Nitrat-haltiges Salz oder ein Peroxid-haltiges Salz.

Unter Nitrat-haltigen Salzen werden im Rahmen der vorliegenden Anmeldung Salze der Salpetersäure verstanden, also Verbindungen die über ein Nitrat-Anion ($NO_3^-$) verfügen. Es kann sich dabei beispielsweise um Alkalimetall-Nitrate, Erdkalimetall-Nitrate, Nicht-Metall-Nitrate oder deren Mischungen handeln, bevorzugt sind Alkalimetall-Nitrate. Beispiele für geeignete Nitrat-haltige Salze sind Kaliumnitrat, Natriumnitrat, Lithiumnitrat, Rubidiumnitrat, Cäsiumnitrat, Bariumnitrat, Calciumnitrat oder Ammoniumnitrat.

Unter Peroxid-haltigen Salzen werden im Rahmen der vorliegenden Anmeldung Salze verstanden, die über ein Peroxid-Anion ($O_2^{2-}$) verfügen. Es kann sich dabei beispielsweise um Alkalimetall-Peroxide, Erdkalimetall-Peroxide oder deren Mischungen handeln, bevorzugt sind Alkalimetall-Peroxide. Beispiele für geeignete Peroxid-haltige Salze sind Kaliumperoxid, Natriumperoxid, Rubidiumperoxid, Cäsiumperoxid, Bariumperoxid oder Calciumperoxid.

Das Sauerstoffdonor-haltige Salz wird bevorzugt im molaren Überschuss zugegeben, bezogen auf den addierten molaren Anteil der Iridium-Vorläuferkomponente und Ruthenium-Vorläuferkomponente, beispielsweise in einem Verhältnis von mindestens 2:1, insbesondere in einem Verhältnis von mindestens 3:1, besonders bevorzugt in einem Verhältnis von mindestens 5:1. Der Überschuss kann zwischen 2 und 100 Moläquivalenten betragen, bevorzugter zwischen 3 und 70 Moläquivalenten, besonders bevorzugt zwischen 5 und 50 Moläquivalenten.

Bei der Kontaktierung der Zusammensetzung mit dem Sauerstoffdonor-haltigen Salz kann das Sauerstoffdonor-haltige Salz in gelöster oder fester Form vorliegen. Für den Fall, dass das Sauerstoffdonor-haltige Salz in gelöster Form verwendet wird, kann es sich bei dem verwendeten Lösungsmittel um das gleiche Lösungsmittel wie dem der Zusammensetzung aus Schritt (i) handeln, es kommen aber auch andere Lösungsmittel oder Lösungsmittelzusammensetzungen in Frage. Bevorzugterweise erfolgt die Zugabe des Sauerstoffdonor-haltigen Salzes in fester Form.

Dabei kann das Sauerstoffdonor-haltigen Salz zu der Zusammensetzung gegeben werden oder umgekehrt.

Vorteilhafterweise erfolgt während der Kontaktierung eine Durchmischung der Zusammensetzung und des Sauerstoffdonor-haltigen Salzes, beispielsweise durch Rühren. Es ist zweckmäßig, der Durchmischung der Zusammensetzung und des Sauerstoffdonor-haltigen Salzes hinreichend Zeit zu gewähren.

Es kann vorteilhaft sein, wenn die Kontaktierung unter erhöhter Temperatur erfolgt, beispielsweise bei Temperaturen im Bereich von 20 bis 80 °C.

Optional, jedoch bevorzugt, kann nach Schritt (ii) und vor Schritt (iii) ein Trocknungsschritt stattfinden, bei dem das Lösungsmittel der Zusammensetzung ganz oder teilweise entfernt wird.

Das Trocknen kann im Sinne einer praktisch vollständigen Befreiung des Lösungsmittels oder im Sinne einer Entfernung des Lösungsmittels bis zum Erreichen eines gewünschten Restgehalts erfolgen. Das Trocknen kann gegebenenfalls durch verminderten Druck unterstützt werden und beispielsweise bei Temperaturen im Bereich von 20 bis 150 °C erfolgen.

Die nach Schritt (ii) erhaltene Zusammensetzung oder optional eine entsprechend weiteren Schritten unterworfene Zusammensetzung wird in Schritt (iii) unter oxidierenden Bedingungen thermisch behandelt. Im vorliegenden Fall werden die Vorläuferverbindungen zu dem erfindungsgemäßen Mischoxid zersetzt.

Bevorzugterweise erfolgt die thermische Behandlung in einer geschlossenen Prozesskammer, in dem ein permanenter Austausch der Atmosphäre erfolgt, beispielsweise in einem Ofen.

Die thermische Behandlung wird bevorzugt unter Anwesenheit von Sauerstoff durchgeführt.

In bevorzugten Ausführungsformen wird der Prozesskammer während der thermischen Behandlung ein Gas zugeführt, das Sauerstoff enthält. Der Sauerstoffanteil im Gas beträgt bevorzugt mindestens 5 Vol.-%, bevorzugter mindestens 10 Vol.-%, noch bevorzugter mindestens 15 Vol.-%. Das Gas kann auch weitere Bestandteile enthalten, zum Beispiel Stickstoff, Argon, Kohlenstoffdioxid oder Wasser. Bei dem Gas kann es sich beispielsweise um Luft handeln.

Die Luftwechselrate beträgt während der thermischen Behandlung bevorzugt mindestens 15 h$^{-1}$, bevorzugter mindestens 30 h$^{-1}$, insbesondere mindestens 65 h$^{-1}$. Die Luftwechselrate beschreibt das Verhältnis des Zuluftvolumenstroms eines Gases, das zugeführt wird und dem Volumen der Prozesskammer und ist ein Maß für die Geschwindigkeit, mit der das Gasvolumen der Prozesskammer ausgetauscht wird.

Bevorzugt erfolgt die thermische Behandlung über einen Zeitraum von 0,5 h bis 24 h, insbesondere über einen Zeitraum von 2 h bis 18 h.

Die thermische Behandlung kann bei einer Temperatur von weniger als 1000 °C, weniger als 800 °C, weniger als 600 °C, weniger als 400 °C, oder weniger als 300 °C stattfinden. Bevorzugt wird findet die thermische Behandlung bei einer Temperatur im Bereich von 250 °C bis 600 °C statt, insbesondere in einem Bereich von 350 °C bis 500 °C. Die vorgenannte Temperatur bzw. Temperaturbereiche ist dabei als Zieltemperatur zu verstehen, die nach einer Aufheizphase erreicht wird.

Zu Beginn der thermischen Behandlung wird die optional getrocknete Zusammensetzung aus Schritt (ii) also aufgeheizt, typischerweise von Raumtemperatur bis zu der vordefinierten Zieltemperatur. Es hat sich als vorteilhaft erwiesen, dass das Aufheizen während der thermischen Behandlung mit einer Aufheizrate von 1 bis 10 °C/min, insbesondere von 3 bis 5 °C/min stattfindet.

Falls vor der thermischen Behandlung kein Trocknungsschritt stattgefunden hat, wird in dieser Aufheizphase zunächst das Lösungsmittel der Zusammensetzung entfernt.

Die Zieltemperatur bei der thermischen Behandlung wird beispielsweise über mindestens 1 h gehalten, bevorzugter über mindestens 3 h.

Das Verfahren kann auch weitere Schritte umfassen, beispielsweise einen zusätzlichen Waschschritt, einen zusätzlichen Filtrationsschritt und/oder einen zusätzlichen Schritt zur Verkleinerung der primär erhaltenen Partikel wie ein Mahlen oder Mörsern.

Weiterhin betrifft die vorliegende Erfindung eine Katalysatorzusammensetzung, enthaltend

- das oben beschriebene pulverförmige Katalysatormaterial und
- ein Ionomer, insbesondere ein Sulfonsäuregruppen-haltiges Ionomer (z.B. ein Sulfonsäuregruppen-haltiges fluoriertes Ionomer).

Geeignete Ionomere sind dem Fachmann bekannt. Beispielsweise ist das Sulfonsäuregruppenhaltige fluorierte Ionomer ein Copolymer, das als Monomere ein Fluorethylen (z.B. Tetrafluorethylen) und einen Sulfonsäuregruppe-haltigen Fluorvinylether (z.B. einen Sulfonsäuregruppe-haltigen Perfluorvinylether) enthält. Eine Übersicht zu diesen Ionomeren findet sich z.B. in folgender Publikation: A. Kusoglu und A.Z. Weber in Chem. Rev., 2017, 117, S. 987-1104.

Die Zusammensetzung ist beispielsweise eine Tinte, die neben dem pulverförmigen Katalysatormaterial und dem Ionomer noch ein flüssiges Medium enthält. Das flüssige Medium enthält beispielsweise einen oder mehrere kurzkettige Alkohole (z.B. Methanol, Ethanol oder n-Propanol oder ein Gemisch aus mindestens zwei dieser Alkohole). Das pulverförmige Katalysatormaterial liegt in der Tinte beispielsweise in einer Konzentration von 5 - 60 Gew.-%, bevorzugter 10 - 50 Gew.-% oder 20 - 40 Gew.-% vor. Das Ionomer liegt in der Tinte beispielsweise in einer Konzentration von 5 - 50 Gew.-%, bevorzugter 10 - 30 Gew.-% vor.

Die Zusammensetzung kann auch weitere Bestandteile enthalten, beispielsweise hydrophile oder hydrophobe Additive, je nach vorgesehenem Einsatzbereich der Zusammensetzung.

Zur Herstellung von Katalysatorschichten, beispielsweise für Elektroden oder katalysatorbeschichtete Membranen, kann eine solche Katalysator-Tinte durch allgemein bekannte Abscheideverfahren auf Gasdiffusionsschichten (GDL), Stromkollektoren, Membranen, Transferschichten oder Separatorplatten aufgebracht werden. Solche Abscheideverfahren umfassen Druckverfahren wie Siebdruck oder Tintenstrahldruck, Sprühverfahren oder Spaltbeschichtungstechniken.

Die Zusammensetzung kann auch als Feststoff vorliegen. Beispielsweise kann die Anode einer Wasserelektrolysezelle eine solche Zusammensetzung als Katalysatorschicht enthalten.

Die vorliegende Erfindung betrifft weiterhin eine Katalysatorschicht umfassend das hierin beschriebenen pulverförmige Katalysatormaterial oder die hierin beschriebene Zusammensetzung, beispielsweise als Katalysatorschicht in einer Elektrode, insbesondere in einer Anode für die Wasserelektrolyse.

Die Eigenschaften der Katalysatorschicht, wie Dicke, Katalysatorbeladung, Porosität, Porengrößenverteilung, durchschnittliche Porengröße und Hydrophobie, hängen davon ab, ob sie an der Anode oder an der Kathode verwendet wird und sind dem Fachmann bekannt.

An der Anode eines Elektrolyseurs findet die Sauerstoffentwicklungsreaktion (OER) statt. Bevorzugt ist die Wasserelektrolyse eine PEM-Wasserelektrolyse (*engl. Proton Exchange Membrane, PEM*), d.h. die Sauerstoffentwicklungsreaktion erfolgt bevorzugt unter sauren Bedingungen. Bei der Verwendung als Elektrokatalysator für die OER erlaubt das erfindungsgemäße Katalysatormaterial eine niedrige Iridiumbeladung, während gleichzeitig immer noch für ein niedriges Überpotenzial im Elektrolyseur und eine sehr gute Langzeitstabilität gewährleistet ist. Wie hierin verwendet, beziehen sich die Begriffe "Iridiumbeladung" oder "Katalysatorbeladung" auf die Masse des Iridiums oder des Katalysatormaterials pro Fläche der Elektrodenschicht.

Die Beladungsmenge des Katalysatormaterials, also der katalytisch aktiven Sauerstoffentwicklungskomponente in der Katalysatorschicht, insbesondere einer Anodenkatalysatorschicht, beträgt vorzugsweise 1,5 mg/cm$^2$ oder weniger pro Flächeneinheit der Elektrode, beispielsweise 1,25 mg/cm$^2$ oder weniger, 1,0 mg/cm$^2$ oder weniger, 0,75 mg/cm$^2$ oder weniger, 0,5 mg/cm$^2$ oder weniger oder 0,25 mg/cm$^2$ oder weniger. Bevorzugte Beladungsmengen können in einem Bereich von 0,02 bis 1,0 mg/cm$^2$ liegen, besonders bevorzugt in einem Bereich von 0,05 bis 0,5 mg/cm$^2$. Wenn die Beladungsmenge weniger als 0,02 mg/cm$^2$ beträgt, kann die Haltbarkeit unzureichend sein, und wenn die Beladungsmenge 1,0 mg/cm$^2$ übersteigt, kann diese Menge die Kosten des Katalysatormaterials für oder bezogen auf dessen Leistung erhöhen.

In bevorzugten Ausführungsformen weist die Katalysatorschicht einen Flächenwiderstand von weniger als 15 kΩ/sq auf, insbesondere weniger als 12 kΩ/sq, besonders bevorzugt weniger als 10 kΩ/sq. Der Flächenwiderstand von Katalysatorschichten kann gemäß dem später beschriebenen Verfahren bestimmt werden.

Die Katalysatorschichtdicke beträgt zweckmäßigerweise mindestens 1 μm, typischerweise mindestens 5 μm. Die Katalysatorschichtdicke kann bis zu 15 μm, typischerweise bis zu 10 μm betragen.

Die vorliegende Erfindung betrifft außerdem eine elektrochemische Vorrichtung, die die das oben beschriebene pulverförmige Katalysatormaterial, eine oben beschriebene Katalysatorzusammensetzung, eine oben beschriebene Katalysatorschicht oder eine oben beschriebene Elektrode enthält. Die vorliegende Erfindung betrifft ebenso die Verwendung des oben beschriebenen pulverförmigen Katalysatormaterials, einer oben beschriebene Katalysatorzusammensetzung oder einer oben beschriebene Katalysatorschicht in einer elektrochemischen Vorrichtung.

Bei der elektrochemischen Vorrichtung kann es sich um einen Elektrolyseur, insbesondere einen Wasserelektrolyseur wie einen PEM-Wasserelektrolyseur oder um eine Brennstoffzelle wie eine PEM-Brennstoffzelle handeln. Wie in jedem Wasserelektrolyseur sind auch im PEM-Wasserelektrolyseur der vorliegenden Erfindung mindestens eine anodenhaltige Halbzelle, in der die Sauerstoffentwicklungsreaktion abläuft, und mindestens eine kathodenhaltige Halbzelle, in der die Wasserstoffentwicklungsreaktion abläuft, vorhanden. Bevorzugt liegt das Katalysatormaterial in der Halbzelle vor, in der die Sauerstoffentwicklung erfolgt (d.h. auf der anodischen Seite der Elektrolysezelle). Wenn das Katalysatormaterial in einer PEM-Brennstoffzelle zusammen mit einem Katalysator auf einem Kohlenstoffträger vorhanden ist, kann sie die Korrosionsstabilität des Kohlenstoffträgers verbessern. Es ist auch möglich, dass die PEM-Brennstoffzelle eine regenerative PEM-Brennstoffzelle ist.

Die vorliegende Erfindung betrifft weiterhin die Verwendung des oben beschriebene pulverförmigen Katalysatormaterials als Katalysator für die Sauerstoffentwicklungsreaktion bei der Wasserelektrolyse, sowie die Verwendung einer oben beschriebenen Katalysatorzusammensetzung oder einer oben beschriebene Katalysatorschicht für diese Reaktion.

In einem weiteren Aspekt betrifft die Erfindung ein Verfahren zur Herstellung von Wasserstoff durch Elektrolyse unter Verwendung des oben beschriebenen pulverförmigen Katalysatormaterials, einer oben beschriebene Katalysatorzusammensetzung oder einer oben beschriebenen Katalysatorschicht.

Nachfolgend sind die in der vorliegenden Erfindung verwendeten Messmethoden angegeben. Falls keine Testmethode angegeben ist, wurde die entsprechende ISO-Methode zur Bestimmung des betreffenden Parameters verwendet, in der gültigen Fassung zum Anmelde-Zeitpunkt der vorliegenden Anmeldung. Falls keine spezifischen Messbedingungen angegeben sind, erfolgte die Messung bei Raumtemperatur (298.15 K) und Normaldruck (100 kPa).

## Messmethoden

### Pulverleitfähigkeit

Zur Messung der elektrischen Leifähigkeit wurden 4-Punkt-Widerstandsmessungen bei Raumtemperatur durchgeführt. Die Pulverleitfähigkeitsmessungen wurde in einer Vorrichtung basierend auf Marinho et al. (Powder Technology 221 (2012) 351-358) durchgeführt. Die Vorrichtung bestand aus einem leitfähigen feststehenden Stempel, auf den eine isolierende Keramikhülse mit einem Innendurchmesser von 1,2 cm vertikal aufgesteckt war. Der feststehende Stempel verschließt den Boden der Keramikhülse. Nach Einfüllen von 15 mL des Probenmaterials wurde mit Hilfe einer Hydraulikpresse eine Kraft von 2 kN über einen leitfähigen beweglichen Stempel auf die Pulverprobe aufgebracht, was einem Anpressdruck von 17,7 MPa entsprach. Über den dabei zurückgelegten Verfahrweg wurde der Abstand d zwischen feststehendem und beweglichem Stempel mit einer digitalen Messuhr bestimmt, welcher der Höhe des komprimierten Pulverbettes entspricht. Zur Messung der Leitfähigkeit wurde mit der Methode der Impedanzspektroskopie über den Frequenzbereich 100 Hz bis 20.000 Hz eine Wechselspannung von 10 mV mit Hilfe eines Potentiostaten (Gamry Reference 3000) angelegt. Aus dem bei 1000 Hz gemessenen Widerstand R (in Ohm) wurde die elektrische Leitfähigkeit des Pulvers wie folgt berechnet:

$$\text{Leitfähigkeit} = d/(R^*A)$$

d: Abstand der 2 Stempel
R: gemessener Widerstand
A: Elektrodenfläche

Der elektrische Widerstand der Vorrichtung selbst (feststehender und beweglicher Stempel, die ohne Pulver miteinander in Kontakt stehen, sowie Kabelkontakte) war niedriger als $10^{-6}$ $\Omega \cdot m$, was die Pulvermessungen nicht beeinflusst.

### BET-Oberfläche

Die BET-Oberfläche wurde mit Stickstoff als Adsorbat bei 77 K gemäß der BET-Theorie bestimmt (Mehrpunkt-Methode, ISO 9277:2010). Für die Messung wurde ein NOVA 3000 (Quantachrome) verwendet, das nach der SMART-Methode (*Sorption Method with Adaptive dosing Rate*) arbeitet. Als Referenzmaterial wurden Aluminiumoxide (SARM Katalog Nr. 2001, 13,92 $m^2/g$ und SARM Katalog Nr. 2004, 214,15 $m^2/g$) von Quantachrome verwendet. Proben wurden zur Trocknung zunächst in der Messzelle der Apparatur für 10 h bei 200 °C unter Vakuum gehalten. Nach dem Abkühlen wurde das Gewicht der Probe ermittelt. Um die Probe zu entgasen, wurde die Messzelle auf einen Enddruck von 10 mbar evakuiert. Für die Datenauswertung wurde die Software NovaWin 11.04 verwendet. Es wurde eine Mehrpunktanalyse mit 15 Messpunkten durchgeführt und die resultierende spezifische Gesamtoberfläche ($BET_{total}$) in $m^2/g$ angegeben. Die Messzelle wurde in einem Flüssigstickstoffbad auf 77 K gekühlt. Für die Adsorption wurde $N_2$ 4.0 mit einer molekularen Querschnittsfläche von 0,162 $nm^2$ bei 77 K für die Berechnung verwendet.

### Edelmetallgehalt des Katalysatormaterials

Der Iridium- und Rutheniumgehalt wurde über optische Emissionsspektrometrie mit induktiv gekoppeltem Plasma (ICP-OES) bestimmt.

### Pulver-Röntgenbeugung (P-XRD)

Pulver-Röntgenbeugungsdaten (P-XRD) wurden in Reflexionsgeometrie mit einem Bruker AXS D8 Diffraktometer unter Verwendung von Cu $K_\alpha$-Strahlung über den Bereich 10 < 20 < 130° in 0,04°-Schritten aufgenommen. Peak-Phasenverfeinerungen wurden mit Referenzdaten der Datenbank NIST660 LaB6 modelliert. Die Reflexionen der Rutilphase wurden mit einer Reihe von Reflexen mit unabhängiger Probenverbreiterung angepasst, um Kristallitgrößen entlang der kristallographischen Ebenen zu erhalten. Für die vorliegenden Materialien wurde der Reflex bei 28° (2Θ), der der (110)-Netzebene entspricht, verwendet

### Partikelgrößenverteilung durch Laserbeugung ($d_{50}$, $d_{90}$)

Zur Bestimmung der Partikelgrößenverteilung wurde eine Laserbeugungsmethode nach der ISO-Norm 13320:2020 verwendet. Für die Messungen wurde der Lasergranulator Partica LA-950V2 (HORIBA) verwendet, ausgestattet mit zwei Laserdioden bei einer Wellenlänge von 650 nm (5 mW) und 405 nm (3 mW) und einer Nassdispergiereinheit (Aqua Flow). Die Messungen wurden bei einer Umgebungstemperatur von 23 °C durchgeführt. Als Messmedium wurde ein Gemisch aus Isopropanol und deionisiertem Wasser (1:1) verwendet. Das Gemisch wurde in der Dispergiereinheit mit Hilfe des eingebauten Rührers bei 3500 U/min entgast und mit Ultraschall bei maximaler Leistung für 10 s beschallt. Die Probe wurde für 30 s mit einem Ultraschalfinger vordispergiert. Die Probe wurde tropfenweise in die Dispergiereinheit zugegeben, bis die Transmission des eingesetzten Laserstrahls um 3 - 7 % reduziert war. Die volumenbasierten Werte ($d_{50}$, $d_{90}$) wurden mit der LA-950 Software bestimmt. Für Partikel größer als 10 $\mu$m wurde die Fraunhofer-Theorie verwendet, die Mie-Theorie für Partikel kleiner als 10 $\mu$m.

Schichtwiderstand

Der Flächenwiderstand R□ von Elektrodenschichten wurde durch eine 4-Punkt-Widerstandsmessung (SD-810, Nagy Messsysteme GmbH) bei Raumtemperatur bestimmt. Die zu vermessende Schicht (10 x 30 cm) wurde auf einem nicht-leitfähigen Untergrund platziert. Die Messung erfolgte durch Kontaktieren der Schicht mit einer Sonde (SQKR-25, Nagy Messsysteme GmbH) mit vier leitfähige Messspitzen (rhodinierte und gefederte Kontaktspitzen) mit einem Abstand von jeweils 2,5 mm.

Elektrochemische Messung mittels rotierender Scheibenelektrode (RDE)

Die Sauerstoffreduktionsaktivität der Katalysatormaterialien wurde durch Messung mittels rotierender Scheibenelektrode (*engl. rotating disc electrode, RDE*) bestimmt. Dafür wurde das Onset-Potenzial (in V) für die Sauerstoffentwicklung und der Stromdichte (in mA/cm$^2$) bei 1,5 V gegen RHE (*engl. reversible hydrogen electrode,* in mA/mg) bestimmt. Die Katalysatorproben wurden in einer wässrigen Nafion-Lösung (1 Gew.-% einer 5 Gew.-% alkoholischen Lösung (Aldrich) in Wasser) dispergiert und auf einer Glaskohlenstoffelektrode fixiert. Zyklische Voltammogramme wurden in Schwefelsäure (0,5 mol/L) bei 60 °C aufgenommen. Die Gegenelektrode war Pt, die Referenzelektrode Kalomel (SI-Analytics), die Abtastgeschwindigkeit betrug 10 mV/s. Der fünfte Scan der Voltammogramme, die zwischen 1,0 und 1,8 V laufen, diente der Erzeugung quasistationärer Bedingungen.

Elektrochemische Messung in CCM

Zur Bestimmung der elektrochemischen Aktivität der Katalysatormaterialien in beschichteten Membranen (*engl. catalyst coated membrane,* CCM) wurde der Wirkungsgrad von Einzelzellen mit einer aktiven Fläche von 5 cm$^2$ gemessen. Die Zelle bestand aus Kohlenstoffplatten mit einem parallel gerade verlaufenden Kanalprofil-Strömungsfeld (*engl. straight channel flow field*) auf der Anoden- und Kathodenseite. Als poröse Transportschicht auf der Anodenseite wurde jeweils ein Platin-beschichteter Titansinter (1 mm Dicke) verwendet. Als Gasdiffusionslage wurde auf der Kathodenseite ein Kohlenstoffpapier (Toray TGP-H-120) verwendet. Deionisiertes Wasser mit einer Leitfähigkeit von weniger als 1 $\mu$S/cm wurde auf der Anodenseite zirkuliert.

In der ersten Versuchsreihe erfolgte die Konditionierung durch Halten bei Stromdichten von 0,2 A/cm$^2$ und 1 A/cm$^2$ für jeweils 30 min, sowie einer Spannung von 1,65 V für 2,5 h. Anschließend wurden Strom-Spannungs-Kennlinien (Polarisationskurven) bei 60 °C und 80 °C aufgezeichnet, indem die Stromdichte von kleinen zu großen Werten (A/cm$^2$) mit einer Haltezeit von jeweils 5 min auf verschiedenen Strompunkten auf 2,0 A/cm$^2$ erhöht wurde.

Anhand der widerstandskorrigierten Messkurve wurde beim Spannungspunkt von 1.45 $V_{iR\text{-free}}$ die Stromdichte ermittelt. Nach Normierung auf die Ir-Beladung [mg/cm$^2$] wurde daraus die Massenaktivität berechnet.

Bestimmung der Degradation mittels beschleunigtem Testverfahren

Zur Bestimmung der Beständigkeit der Katalysatormaterialien wurde ein beschleunigter Degradationstest im Aufbau der elektrochemischen Aktivitätsmessung durchgeführt. Die Aktivfläche wurde dafür auf 1 cm$^2$ reduziert. Um eine beschleunigte Alterung zu simulieren, wurde wie folgt vorgegangen:

Die Konditionierung wurde wie zur Bestimmung der elektrochemischen Aktivität beschrieben durchgeführt. Anschließend wurde wie zuvor beschrieben eine Polarisationskurve bei 80 °C bis zu einem Stromdichtepunkt von 6 A/cm$^2$ aufgezeichnet. Diese Kurve definiert den Anfangszustand (*engl. begin of life, BOL*). Im Anschluss erfolgte das Abfahren eines Potentialfensters von 1,4 bis 1,9 V mit 500 mV/s mittels Sägezahnmusters für 10.000 Zyklen. Anschließend wurde erneut eine Polarisationskurve bei 80 °C bis zu einem Stromdichtepunkt von 6 A/cm$^2$ aufgenommen. Diese Vorgehensweise wurde noch zwei weitere Male wiederholt, um insgesamt 30.000 Stresszyklen und weitere Polarisationskurven nach 20.000 und 30.000 Zyklen abbilden zu erhalten. Die Polarisationskurve nach 30.000 Zyklen wird als EOL (*engl. end of life*) gekennzeichnet.

Anhand der nachfolgenden Beispiele wird die Erfindung eingehender erläutert.

EB1

Zur Herstellung von 50 g des Mischoxides wurden 64,59 g Ir-chlorid (IrCl$_4$*H$_2$O - 52,89 % Ir; 178 mmol) in 50 mL Wasser (vollentsalzt, VEW gelöst. Anschließend wurden. 32,64 g Ru-chlorid Lösung (RuCl$_3$-Lsg. 23,6 % Ru; 76 mmol) zugeben und die Lösung bei Raumtemperatur gerührt. Im Weiteren wurden 20 Mol-Äquivalente Natriumnitrat als Feststoff hinzugegeben (432,2 g) und bei erhöhter Temperatur bis zur vollständigen Lösung gerührt. Das Gemisch wurde in einer Porzellanschale eingetrocknet und das trockene Gemisch in einen Ofen überführt.

Der Ofen wurde von Raumtemperatur auf die Zieltemperatur von 370 °C mit einer Aufheizrate von 5 °C/min geheizt. Anschließend wurde die Temperatur für 6 h mit einem Volumenfluss von 400 L/min Luft gehalten.

Nach Abkühlen auf Raumtemperatur wurde der schwarze Feststoff 50 L VEW über eine Filternutsche gewaschen und abschließend im Vakuumtrockenschrank bei 120 °C über Nacht getrocknet.

EB2

Zur Herstellung von 50 g des Mischoxides wurden 57,99 g Ir-chlorid (IrCl$_4$*H$_2$O - 52,9 % Ir; 160 mmol) in 80 mL VEW gelöst. Anschließend wurden 45,64 g Ru-chlorid Lösung (RuCl$_3$-Lsg. 23,6 % Ru; 107 mmol) zugeben und die Lösung bei Raumtemperatur gerührt. Im Weiteren wurden 20 Mol-Äquivalente Natriumnitrat als Feststoff hinzugegeben (452 g) und bei erhöhter Temperatur bis zur vollständigen Lösung gerührt. Die übrige Präparation erfolgte analog EB1.

EB3

Zur Herstellung von 50 g des Mischoxides wurden 50,82 g Ir-chlorid (IrCl$_4$*H$_2$O - 52,9 % Ir; 140 mmol) in 50 mL VEW gelöst. Anschließend wurden 59,91 g Ru-chlorid Lösung (RuCl$_3$-Lsg. 23,6 % Ru; 140 mmol) zugeben und die Lösung bei Raumtemperatur gerührt. Im Weiteren wurden 20 Mol-Äquivalente Natriumnitrat als Feststoff hinzugegeben (476 g) und bei erhöhter Temperatur bis zur vollständigen Lösung gerührt. Die übrige Präparation erfolgte analog EB1.

EB4

Zur Herstellung von 50 g des Mischoxides wurden 42,84 g Ir-chlorid (IrCl$_4$*H$_2$O - 52,9 % Ir; 118 mmol) in 60 mL VEW gelöst. Anschließend wurden 75,78 g Ru-chlorid Lösung (RuCl$_3$-Lsg. 23,6 % Ru; 177 mmol) zugeben und die Lösung bei Raumtemperatur gerührt. Im Weiteren wurden 20 Mol-Äquivalente Natriumnitrat als Feststoff hinzugegeben (502 g) und bei erhöhter Temperatur bis zur vollständigen Lösung gerührt. Die übrige Präparation erfolgte analog EB1.

EB5

Zur Herstellung von 50 g des Mischoxides wurden 33,96 g Ir-chlorid (IrCl$_4$*H$_2$O - 52,9 % Ir; 94 mmol) in 50 mL VEW gelöst. Anschließend wurden. 93,39 g Ru-chlorid Lösung (RuCl$_3$-Lsg. 23,6 % Ru; 218 mmol) zugeben und die Lösung bei Raumtemperatur gerührt. Im Weiteren wurden 20 Mol-Äquivalente Natriumnitrat als Feststoff hinzugegeben (530 g) und bei erhöhter Temperatur bis zur vollständigen Lösung gerührt. Die übrige Präparation erfolgte analog EB1.

VB1

Zur Herstellung von 50 g des Mischoxides wurden 70,52 g Ir-chlorid (IrCl$_4$*H$_2$O - 52,9 % Ir; 194 mmol) in 60 mL VEW gelöst. Anschließend wurden 20,79 g Ru-chlorid Lösung (RuCl$_3$-Lsg. 23,6 % Ru; 49 mmol) zugeben und die Lösung bei Raumtemperatur gerührt. Im Weiteren wurden 20 Mol-Äquivalente Natriumnitrat als Feststoff hinzugegeben (413 g) und bei erhöhter Temperatur bis zur vollständigen Lösung gerührt. Die übrige Präparation erfolgte analog EB1.

VB2

Zur Herstellung von 50 g Iridiumoxid wurden 79,84 g Ir-chlorid (IrCl$_4$*H$_2$O - 52,9 % Ir; 224 mmol) in 60 mL VEW gelöst. Anschließend wurden 20 Mol-Äquivalente Natriumnitrat als Feststoff hinzugegeben (380 g) und bei erhöhter Temperatur bis zur vollständigen Lösung gerührt. Die übrige Präparation erfolgte analog EB1.

Herstellung beschichteter Membrane (CCMs)

Zur Herstellung beschichteter Membrane (*engl. catalyst coated membrane,* CCM) wurden die Katalysatormaterialien mit Wasser (*ultra pure*), Lösungsmittel (Mischung aus 1-Propanol und Ethanol, Gew.-%-Verhältnis 70-30) und Ionomerlösung (Nafion D2020, Chemours) in einer Tinte dispergiert und zur Ausbildung der Anode auf eine Membran aufgebracht, die ein Sulfonsäuregruppen-haltiges fluoriertes Polymer enthält. Die Beschichtung erfolgte durch ein Decal-Transferverfahren von PTFE-Transferfolien auf die Polymermembran (Nafion 212, 50 μm, Chemours). Auf der Anodenseite wurde das jeweilige Katalysatormaterial verwendet; auf der Kathodenseite ein auf einem Kohlenstoff geträgerter Pt-Katalysator und ein fluoriertes Ionomer.

Die Beschichtung der PTFE-Folie wurde mit einer Mayer-Bar-Beschichtungsmaschine durchgeführt. Aus den getrockneten Schichten wurden 5 cm² große Decals herausgestanzt und unter Druck (2.5 MPa) und Temperatur (155 °C) auf die Polymermembran gepresst. Die Beladung wurde durch Auswaage der PTFEs vor und nach dem Übertragungsvorgang bestimmt.

Die Ergebnisse zur Charakterisierung der Katalysatormaterialien bezüglich ihrer Zusammensetzung, Pulverleitfähigkeit, Partikelgröße, BET-Oberfläche sowie der Aktivität in RDE-Messungen sind in Tabelle 1 zusammengefasst. Alle erfindungsgemäßen Katalysatoren zeigten schon eine hohe Aktivität in der Halbzellenmessung.

**Tabelle 1:** Charakterisierung der Katalysatormaterialien

|  | Verhältnis Gew.-% Ir/Ru | Pulverleitfähigkeit [S/cm] | $d_{50}$ [μm] | BET [m²/g] | Aktivität bei 1,50 V [A/g$_{Ir}$] Halbzelle |
|---|---|---|---|---|---|
| EB1 | 4,44 | 33,0 | 3,34 | 165 | 160 |
| EB2 | 2,85 | 43,8 | 3,01 | 205 | 185 |
| EB3 | 1,90 | 40,6 | 3,08 | 190 | 214 |
| EB4 | 1,27 | 59,9 | 2,44 | 175 | 246 |
| EB5 | 0,82 | 88,4 | 2,21 | 145 | 426 |
| VB1 | 7,60 | 38,9 | 3,91 | 153 | 132 |
| VB2 | - | 33,9 | 2,51 | 230 | 102 |

Die Ergebnisse zur Charakterisierung der beschichteten Membrane bezüglich ihrer Zusammensetzung, Schichtwiderstände und elektrochemischen Aktivitäten sind in Tabelle 2 zusammengefasst. Die Beladung mit Katalysatormaterial betrug jeweils 1 mg/cm².

Tabelle 2: Charakterisierung der beschichteten Membrane

|  | Anteil Ir in Anodenschicht [Gew.-%] | Schichtwiderstand R□ [kΩ/sq] | Aktivität bei 1,45 V$_{iR-free}$ [A/g$_{Ir}$] | Zellpotential bei 1,9 A/cm² [V] |
|---|---|---|---|---|
| EB1 | 58 | 12,6 | 177 | 1,64 |
| EB2 | 52 | 6,6 | 330 | 1,65 |
| EB3 | 46 | 3,5 | 488 | 1,63 |
| EB4 | 39 | 5,1 | 623 | 1,63 |
| EB5 | 31 | 2,3 | 880 | 1,62 |
| VB1 | 63 | 15,2 | 69 | 1,66 |
| VB2 | 73 | 10,5 | 53 | 1,65 |

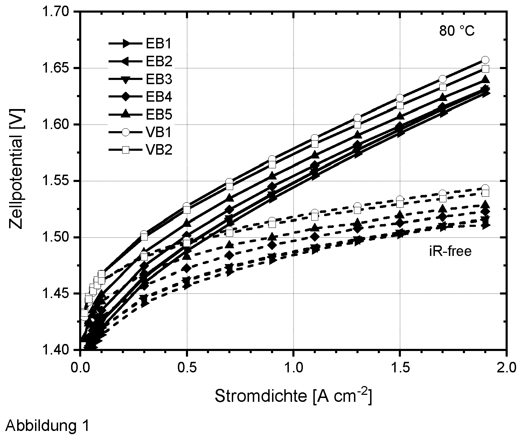

Abbildung 1 zeigt die Messkurven zur Bestimmung der Aktivität der Katalysatormaterialien (Zellspannung als Funktion der Stromdichte). Parallel wurde der Hochfrequenzwiderstand per elektrochemischer Impedanz-Spektroskopie Messungen an den genannten Strompunkten bestimmt, so dass eine Korrektur des Zellwiderstandes vorgenommen werden konnte (iR-free, gestrichelte Linien).

Alle erfindungsgemäßen Materialien zeigten gegenüber den Vergleichsbeispielen eine erhöhte Aktivität (erkennbar durch die nach unten verschobenen Polarisationskurven), sowohl in der Messkurve (durchgezogene Linien) als auch in den widerstandskorrigierten Kurven (unterbrochene Linie). Darüber hinaus zeigen die Daten, dass eine Verringerung des Iridium-Gehalts in der Elektrode zu einer Verbesserung der Aktivität führt, sichtbar im Stromdichtebereich unter 0,1 A/cm². Insbesondere der Vergleich mit VB1 zeigt, dass eine hohe Pulverleitfähigkeit nicht ausreichend ist, um eine CCM mit hoher Aktivität herzustellen.

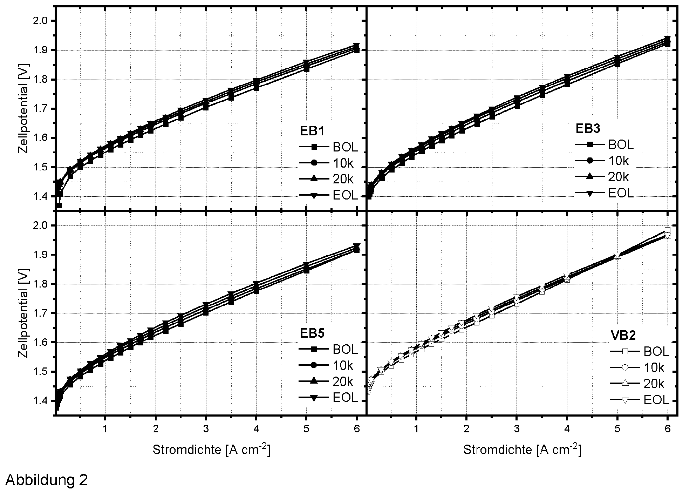

In Abbildung 2 sind die Polarisationskurven-Messungen verschiedener Katalysatormaterialien mit zunehmender Zyklenzahl gezeigt. Die Abbildung stellt die Ergebnisse für EB1, EB3 und EB5 im denen von VB2 gegenüber. Die erfindungsgemäßen Katalysatormaterialien verfügen über die gleiche Stabilität wie das hochstabile, aber deutlich inaktivere Material aus VB2. Dies ist durch die nahezu konstanten Kurvenverlauf nach 10.000, 20.000 und 30.000 (=EOL) Zyklen verglichen mit den jeweiligen Anfangskurven (BOL) zu erkennen.

Die gezeigten Ergebnisse verdeutlichen, dass sich mit dem erfindungsgemäßen Katalysatormaterialien Anoden fertigen lassen, die trotz einer geringen flächenbezogenen Iridium-Beladung eine sehr hohe elektrochemische Aktivität und eine hohe Korrosionsstabilität aufweisen.

**Patentansprüche**

1. Pulverförmiges Katalysatormaterial umfassend ein ungeträgertes Ruthenium-Iridium-Oxid, wobei das Verhältnis der Gewichtsanteile von Iridium (Ir) zu Ruthenium (Ru) bezogen auf das Gesamtgewicht des Ruthenium-Iridium-Oxids nicht größer als 4,5 ist,
dadurch charakterisiert, dass
das ungeträgerte Ruthenium-Iridium-Oxid eine Pulverleitfähigkeit von mindestens 30 S/cm aufweist.

2. Pulverförmiges Katalysatormaterial gemäß Anspruch 1, wobei der Anteil von Iridium weniger als 70 Gew.-%, bezogen auf das Gesamtgewicht des Ruthenium-Iridium-Oxids, beträgt.

3. Pulverförmiges Katalysatormaterial gemäß Anspruch 1 oder 2, wobei der mittlere Partikeldurchmesser $d_{50}$ kleiner als 8 $\mu$m ist.

4. Pulverförmiges Katalysatormaterial gemäß einem der vorangegangenen Ansprüche, wobei die Partikel des Katalysatormaterials ein Partikelgrößenverhältnis von $d_{90}$ zu $d_{50}$ kleiner als 2,5 aufweisen.

5. Pulverförmiges Katalysatormaterial gemäß einem der vorangegangenen Ansprüche, wobei das ungeträgerte Ruthenium-Iridium-Oxid im XRD-Spektrum (Cu K$\alpha$) mindestens ein Maximum im Bereich von 66° bis 67° (2$\Theta$) aufweist.

6. Pulverförmiges Katalysatormaterial gemäß einem der vorangegangenen Ansprüche, wobei das ungeträgerte Ruthenium-Iridium-Oxid Kristallite im Bereich von 1 bis 10 nm aufweist, bestimmt über den XRD-Reflex bei 28°(2$\Theta$).

7. Pulverförmiges Katalysatormaterial gemäß einem der vorangegangenen Ansprüche, wobei das ungeträgerte Ruthenium-Iridium-Oxid eine BET-Oberfläche von mindestens 80 $m^2$/g aufweist.

8. Pulverförmiges Katalysatormaterial gemäß einem der vorangegangenen Ansprüche, wobei die elektrochemische Aktivität, ermittelt als Stromdichte in A/g(Ir) bei 1,5 V gegen RHE, im Bereich von 200 bis 5000 A/g(Ir) liegt.

9. Verfahren zur Herstellung eines pulverförmigen Katalysatormaterials nach einem der Ansprüche 1 bis 8, umfassend die aufeinanderfolgenden Schritte

   (i) Bereitstellung einer Zusammensetzung, enthaltend ein Lösungsmittel, eine Iridium-Vorläuferkomponente und eine Ruthenium- Vorläuferkomponente,
   (ii) Kontaktieren der Zusammensetzung mit einem Sauerstoffdonor-haltigen Salz,
   (iii) thermische Behandlung unter oxidierenden Bedingungen.

10. Verfahren gemäß Anspruch 9, wobei die Zusammensetzung keine porenbildenden Additive enthält.

11. Zusammensetzung, enthaltend

    - pulverförmiges Katalysatormaterial gemäß einem der Ansprüche 1 bis 8,
    - ein Ionomer, insbesondere ein Sulfonsäuregruppen-haltiges Ionomer.

12. Katalysatorschicht, enthaltend ein pulverförmiges Katalysatormaterial gemäß einem der Ansprüche 1 bis 8.

13. Katalysatorschicht gemäß Anspruch 12, aufweisend einen Flächenwiderstand von weniger als 15 k$\Omega$/sq.

**14.** Elektrochemische Vorrichtung, umfassend ein pulverförmiges Katalysatormaterial gemäß einem der Ansprüche 1 bis 8.

**15.** Verfahren zur Herstellung von Wasserstoff durch Elektrolyse unter Verwendung des pulverförmigen Katalysatormaterials gemäß einem der Ansprüche 1 bis 8.

Abbildung 1

Abbildung 2

| | Europäisches Patentamt<br>European Patent Office<br>Office européen des brevets | **EUROPÄISCHER RECHERCHENBERICHT** | **Nummer der Anmeldung**<br>EP 23 20 8119 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | CN 114 164 458 A (7TH 8TH RES INSTITUTE OF CHINESE SHIP HEAVY INDUSTRY GROUP COMPANY) 11. März 2022 (2022-03-11) * Ansprüche 1-10; Abbildung 9; Beispiel 1 * | 1-15 | INV.<br>C25B1/04<br>B01J23/46<br>C25B11/031<br>C25B11/032<br>C25B11/037 |
| A | CN 111 420 658 A (UNIV SHANGHAI) 17. Juli 2020 (2020-07-17) * das ganze Dokument * | 1-15 | C25B11/052<br>C25B11/054<br>C25B11/091<br>C25B11/097 |
| A | CN 115 404 510 A (SUZHOU HYDROGINE POWER TECH CO LTD) 29. November 2022 (2022-11-29) * Abbildung 2; Beispiele 1-10 * | 1-15 | H01M4/92 |
| A | CN 114 561 662 A (UNIV TIANJIN) 31. Mai 2022 (2022-05-31) * Ansprüche 1-9; Beispiel 1 * | 1-15 | |
| A,D | CN 116 479 466 A (YUNNAN PRECIOUS METALS LABORATORY CO LTD; KUNMING INST PRECIOUS METALS) 25. Juli 2023 (2023-07-25) * das ganze Dokument * | 1-15 | **RECHERCHIERTE SACHGEBIETE (IPC)**<br><br>C25B<br>H01M<br>B01J |

Der vorliegende Recherchenbericht wurde für alle Patentansprüche erstellt

| Recherchenort | Abschlußdatum der Recherche | Prüfer |
|---|---|---|
| München | 6. Juni 2024 | Teppo, Kirsi-Marja |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 20 8119

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-06-2024

| Im Recherchenbericht angeführtes Patentdokument | Datum der Veröffentlichung | Mitglied(er) der Patentfamilie | Datum der Veröffentlichung |
|---|---|---|---|
| CN 114164458 A | 11-03-2022 | KEINE | |
| CN 111420658 A | 17-07-2020 | KEINE | |
| CN 115404510 A | 29-11-2022 | KEINE | |
| CN 114561662 A | 31-05-2022 | KEINE | |
| CN 116479466 A | 25-07-2023 | KEINE | |

EPO FORM P0461

Für nähere Einzelheiten zu diesem Anhang : siehe Amtsblatt des Europäischen Patentamts, Nr.12/82

**EP 4 553 191 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1701790 A1
- CN 116479466 A
- CN 114164458 A

**In der Beschreibung aufgeführte Nicht-Patentliteratur**

- **M. CARMO et al.** *International Journal of Hydrogen Energy*, 2013, vol. 38, 4901-4934
- **A. BUTTLER** ; **H. SPLIETHOFF**. *Ren. Sus. Energy Rev.*, 2018, vol. 82, 2440-2454
- **M. BERNT et al.** Analysis of Voltage Losses in PEM Water Electrolyzers with Low Platinum Group Metal Loadings. *J. Electrochem. Soc.*, 2018, vol. 165, F305-F314
- Current Challenges in Catalyst Development for PEM Water Electrolyzers. *Chem. Ing. Tech.*, 2020, vol. 92 (1-2), 31-39
- **A. KUSOGLU** ; **A.Z. WEBER**. *Chem. Rev.*, 2017, vol. 117, 987-1104
- **MARINHO et al.** *Powder Technology*, 2012, vol. 221, 351-358